(19)

Europäisches
Patentamt
European
Patent Office
Office européen
des brevets

(11) **EP 4 071 201 A1**

(12) **EUROPEAN PATENT APPLICATION**
published in accordance with Art. 153(4) EPC

(43) Date of publication:
**12.10.2022 Bulletin 2022/41**

(21) Application number: **20897333.9**

(22) Date of filing: **03.12.2020**

(51) International Patent Classification (IPC):
*C08J 3/22* (2006.01)      *C08K 7/02* (2006.01)
*C08K 9/04* (2006.01)      *C08L 1/02* (2006.01)
*C08L 1/12* (2006.01)      *C08L 23/26* (2006.01)
*C08J 5/06* (2006.01)

(52) Cooperative Patent Classification (CPC):
**C08J 3/22; C08J 5/06; C08K 7/02; C08K 9/04;
C08L 1/02; C08L 1/12; C08L 51/06**

(86) International application number:
**PCT/JP2020/045054**

(87) International publication number:
**WO 2021/112183 (10.06.2021 Gazette 2021/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.12.2019 JP 2019220072
05.12.2019 JP 2019220073
30.03.2020 JP 2020059387
30.03.2020 JP 2020059388
31.03.2020 JP 2020063194
31.03.2020 JP 2020063195**

(71) Applicant: **Nippon Paper Industries Co., Ltd.
Tokyo 114-0002 (JP)**

(72) Inventors:
• **FUKUDA, Yujiroh
Tokyo 114-0002 (JP)**
• **KAKUTA, Io
Tokyo 114-0002 (JP)**

(74) Representative: **Kuhnen & Wacker
Patent- und Rechtsanwaltsbüro PartG mbB
Prinz-Ludwig-Straße 40A
85354 Freising (DE)**

(54) **MASTER BATCH AND RESIN COMPOSITION**

(57)     The present invention provides a master batch comprising: cellulose fibers modified with a compound derived from urea or a derivative thereof, and acid-modified polypropylene; and the acid-modified polypropylene, wherein the master batch satisfies following conditions (A) and (B): (A) When temperature is increased at 10°C per minute under a nitrogen atmosphere, a weight loss of the master batch during temperature increase from 105°C to 300°C is 10 to 40%, and a weight loss of the master batch during temperature increase from 390°C to 880°C is 5 to 45%, based on an absolute dry weight of the master batch; and (B) the following relationship is satisfied: b/a > 0.05, where a is a maximum peak intensity in a closed interval [1,315 cm$^{-1}$, 1,316 cm$^{-1}$], and b is a maximum peak intensity in an open interval (750 cm$^{-1}$, 800 cm$^{-1}$) in an infrared absorption spectrum of the master batch.

**EP 4 071 201 A1**

**Description**

Technical Field

The present invention relates to a master batch containing miniaturized cellulose fibers, and a method for producing a resin composition containing the master batch. Furthermore, the present invention relates to a master batch containing miniaturized acetylated cellulose fibers, and a resin composition containing the master batch.

Background Art

Fine fibrous cellulose obtained by defibrating plant fibers includes microfibrillated cellulose and cellulose nanofibers, and is fine fibers having a fiber diameter of about 1 nm to several 10 μm. Fine fibrous cellulose, which is lightweight, has high strength and high elastic modulus, and has a low linear thermal expansion coefficient, is suitably used as a reinforcing material of a resin composition.

The fine fibrous cellulose is usually obtained in a state of being dispersed in water, and it has been difficult to uniformly mix the fine fibrous cellulose with a resin or the like. Therefore, attempts have been made to chemically modify cellulose raw materials in order to improve affinity and miscibility with resins.

For example, in Patent Literature 1, a cellulose raw material in which a part of hydroxy groups of cellulose is substituted with a carbamate group is obtained by heat-treating a cellulose raw material and urea, and the cellulose raw material is miniaturized by a mechanical treatment to obtain fine fibrous cellulose. The fine fibrous cellulose obtained by this method has low hydrophilicity and high affinity with resin or the like having low polarity as compared with conventional fine fibrous cellulose, and thus is highly uniformly dispersed in the resin to give a composite having high strength. Further, Patent Literature 1 discloses that a mixture of the heat-treated cellulose raw material and urea is washed with water or the like to remove unreacted residual urea or the like.

However, the resin composite obtained in Patent Literature 1 does not have a sufficient effect of improving elongation. In general, there is a trade-off between reinforcement (improvement of elastic modulus) and improvement in elongation, and thus there has been a demand for a master batch and a resin composition capable of providing a resin molded body achieving high tensile modulus and improvement in elongation.

Citation List

Patent Literature

Patent Literature 1: JP 2019-1876 A

Summary of Invention

Technical Problem

An object of the present invention is to provide a master batch and a resin composition capable of providing a resin molded body achieving high tensile modulus and improvement in elongation.

Solution to Problem

The present invention provides the following.

(1) A master batch containing: cellulose fibers modified with a compound derived from urea or a derivative thereof, and acid-modified polypropylene; and the acid-modified polypropylene, wherein the master batch satisfies following conditions (A) and (B):

(A) when temperature is increased at 10°C per minute under a nitrogen atmosphere, a weight loss of the master batch during temperature increase from 105°C to 300°C is 10 to 40%, and a weight loss of the master batch during temperature increase from 390°C to 880°C is 5 to 45%, based on an absolute dry weight of the master batch; and

(B) a following relationship is satisfied:

$$b/a > 0.05$$

where a is a maximum peak intensity in a closed interval [1,315 cm$^{-1}$, 1,316 cm$^{-1}$], and b is a maximum peak intensity in an open interval (750 cm$^{-1}$, 800 cm$^{-1}$) in an infrared absorption spectrum of the master batch.

(2) The master batch according to (1), further satisfying a following condition (C):
(C) a following relationship is satisfied:

$$Y > -14.9X + 4.7$$

where X is a common logarithm of a value of relative tensile modulus with a value of tensile modulus of polypropylene alone being 1, and Y is a value of relative tensile strain with a value of tensile strain of a resin molded body composed only of cellulose fibers and polypropylene being 1, when a mixture obtained by adding 8 parts of polypropylene to 1 part of a total amount of a cellulose fiber component of cellulose and hemicellulose in the cellulose fibers contained in the master batch is kneaded at 180°C and molded into a dumbbell test piece, and the dumbbell test piece is subjected to a tensile test.

(3) A resin composition containing: the master batch according to (1) or (2); and a thermoplastic resin, wherein a content of the thermoplastic resin is 220 to 984 wt% based on 100 wt% of a cellulose fiber component of cellulose and hemicellulose in the cellulose fibers contained in the master batch.

(4) A master batch containing: acetylated cellulose fibers modified with a compound derived from urea or a derivative thereof, and acid-modified polypropylene; and the acid-modified polypropylene, wherein the master batch satisfies following conditions (A) and (B):

(A) when temperature is increased at 10°C per minute under a nitrogen atmosphere, a weight loss of the master batch during temperature increase from 105°C to 300°C is 10 to 40%, and a weight loss of the master batch during temperature increase from 390°C to 880°C is 5 to 45%, based on an absolute dry weight of the master batch; and
(B) a following relationship is satisfied:

$$b/a > 0.05$$

where a is a maximum peak intensity in a closed interval [1,315 cm$^{-1}$, 1,316 cm$^{-1}$], and b is a maximum peak intensity in an open interval (750 cm$^{-1}$, 800 cm$^{-1}$) in an infrared absorption spectrum of the master batch.

(5) The master batch according to (4), further satisfying a following condition (C):
(C) a following relationship is satisfied:

$$Y > -14.9X + 4.7$$

where X is a common logarithm of a value of relative tensile modulus with a value of tensile modulus of polypropylene alone being 1, and Y is a value of relative tensile strain with a value of tensile strain of a resin molded body composed only of acetylated cellulose fibers and polypropylene being 1, when a mixture obtained by adding 8 parts of polypropylene to 1 part of a total amount of a cellulose fiber component of cellulose and hemicellulose not including an acetylated portion in the acetylated cellulose fibers contained in the master batch is kneaded at 180°C and molded into a dumbbell test piece, and the dumbbell test piece is subjected to a tensile test.

(6) A resin composition containing: the master batch according to (4) or (5); and a thermoplastic resin, wherein a content of the thermoplastic resin is 107 to 983 wt% based on 100 wt% of a cellulose fiber component of cellulose and hemicellulose not including an acetylated portion in the acetylated cellulose fibers contained in the master batch.

Advantageous Effects of Invention

According to the present invention, it is possible to provide a master batch and a resin composition capable of providing a resin molded body achieving high tensile modulus and improvement in elongation.

Description of Embodiments

Hereinafter, the master batch of the present invention will be described. In the present invention, "to" includes an end value. That is, "X to Y" includes values X and Y at both ends thereof.

The master batch (master batch A) of the present invention contains cellulose fibers modified with a compound derived from urea or a derivative thereof, and acid-modified polypropylene, and the acid-modified polypropylene, and satisfies the following conditions (A) and (B):

(A) when temperature is increased at 10°C per minute under a nitrogen atmosphere, a weight loss of the master batch during temperature increase from 105°C to 300°C is 10 to 40%, and a weight loss of the master batch during temperature increase from 390°C to 880°C is 5 to 45%, based on an absolute dry weight of the master batch; and
(B) the following relationship is satisfied:

$$b/a > 0.05$$

where a is a maximum peak intensity in a closed interval [1,315 cm$^{-1}$, 1,316 cm$^{-1}$], and b is a maximum peak intensity in an open interval (750 cm$^{-1}$, 800 cm$^{-1}$) in an infrared absorption spectrum of the master batch.

The master batch (master batch B) of the present invention contains acetylated cellulose fibers modified with a compound derived from urea or a derivative thereof, and acid-modified polypropylene, and the acid-modified polypropylene, and satisfies the following conditions (A) and (B) :

(A) when temperature is increased at 10°C per minute under a nitrogen atmosphere, a weight loss of the master batch during temperature increase from 105°C to 300°C is 10 to 40%, and a weight loss of the master batch during temperature increase from 390°C to 880°C is 5 to 45%, based on an absolute dry weight of the master batch; and
(B) the following relationship is satisfied:

$$b/a > 0.05$$

where a is a maximum peak intensity in a closed interval [1,315 cm$^{-1}$, 1,316 cm$^{-1}$], and b is a maximum peak intensity in an open interval (750 cm$^{-1}$, 800 cm$^{-1}$) in an infrared absorption spectrum of the master batch.

(Cellulose fibers)

The cellulose fibers used in the master batch A of the present invention have a weighted average fiber length (length average fiber length) in the range of 0.2 to 1.5 mm, and preferably 0.3 to 1.0 mm. Such cellulose fibers can be obtained, for example, by pulverizing or beating a cellulose raw material.

(Acetylated cellulose fibers)

The acetylated cellulose fibers used in the master batch B of the present invention are those in which a hydrogen atom of a hydroxyl group present on the surface of the cellulose raw material is substituted with an acetyl group (CH$_3$-CO-). Substitution with an acetyl group enhances hydrophobicity and thus reduces aggregation at the time of drying. This enhances workability and facilitates dispersion and defibration of cellulose fibers in the resin after kneading. The degree of substitution (DS) with acetyl group of the acetylated cellulose fibers is adjusted to preferably 0.4 to 1.3, and more preferably 0.6 to 1.1 from the viewpoint of workability and maintenance of crystallinity of the cellulose fibers.

(Cellulose raw material)

In the present invention, the cellulose raw material may be any material as long as it is a material having a form mainly composed of cellulose, and contains lignocellulose (NUKP). Examples thereof include pulp (for example, bleached or unbleached wood pulp, bleached or unbleached non-wood pulp, and pulp derived from herbaceous plants such as refined linter, jute, Manila hemp, and kenaf), natural cellulose such as cellulose produced by microorganisms such as acetic acid bacteria, regenerated cellulose obtained by dissolving cellulose in a solvent such as a copper ammonia solution or a morpholine derivative, followed by reprecipitation, fine cellulose obtained by depolymerizing cellulose by subjecting the cellulose raw material to hydrolysis, alkali hydrolysis, enzymatic decomposition, or a mechanical treatment such as a blasting treatment and vibration ball mill, and various cellulose derivatives (when used in the master batch B, various cellulose derivatives having no influence on acetylation modification).

Note that lignocellulose is a complex carbohydrate polymer constituting the cell wall of plants, and is mainly composed of cellulose and hemicellulose which are polysaccharides, and lignin which is an aromatic polymer. The content of lignin can be adjusted by subjecting pulp or the like as a raw material to lignin removal or bleaching.

In the present invention, when pulp is used as the cellulose raw material, either unbeaten or beaten pulp may be used, but pulp subjected to a beating treatment is preferably used. As a result, increase in the specific surface area of the pulp and increase in the urea reaction amount can be expected. The degree of the beating treatment is such that the freeness (C.S.F) is preferably 400 mL or less, and more preferably about 100 mL to 200 mL. When the freeness exceeds 400 mL, the effect cannot be exhibited, and when the freeness is less than 100 mL, the cellulose fibers are shortened due to damage, and as a result, the effect of improving the strength is inhibited when a reinforced resin is produced using such cellulose fibers. In addition, when the weighted average fiber length (length average fiber length) of cellulose fibers that have been subjected to the later-described acetylation reaction, washing treatment, and drying treatment falls within a range of 0.2 to 1.5 mm, preferably 0.3 to 1.0 mm by performing the beating treatment, the later-described pulverizing step may be omitted.

Examples of the beating treatment include mechanically (dynamically) treating pulp fibers using a known beating machine. As the beating machine, a beating machine usually used in beating pulp fibers can be used. Examples thereof include a Niagara beater, a PFI mill, a disc refiner, a conical refiner, a ball mill, a stone mill, a sand grinder mill, an impact mill, a high-pressure homogenizer, a low-pressure homogenizer, a Dyno mill, an ultrasonic mill, a Kanda grinder, an attritor, a vibration mill, a cutter mill, a jet mill, a disintegrator, a household juicer mixer, and a mortar. Among them, a Niagara beater, a disc refiner, and a conical refiner are preferable, and a disc refiner and a conical refiner are more preferable.

In the beating treatment, dehydration may be performed as necessary. As the dehydration method, pressure dehydration using a screw press, reduced pressure dehydration by volatilization or the like can be performed, but centrifugal dehydration is preferable from the viewpoint of efficiency. The dehydration is preferably performed until the solid content in the solvent reaches about 10 to 60%.

(Acetylation reaction)

When the acetylation reaction is performed in the presence of a base by suspending the cellulose raw material in an anhydrous aprotic polar solvent capable of swelling the cellulose raw material, for example, N-methylpyrrolidone (NMP) or N,N-dimethylformamide (DMF), and using halogenated acetyl such as acetic anhydride or acetyl chloride, the reaction can be performed in a short time. As the base used in this acetylation reaction, pyridine, N,N-dimethylaniline, sodium carbonate, sodium bicarbonate, potassium carbonate and the like are preferable, and potassium carbonate is more preferable. In addition, it is also possible to perform the reaction under conditions in which an anhydrous aprotic polar solvent or a base is not used by excessively using an acetylating reagent such as acetic anhydride.

The acetylation reaction is preferably performed, for example, at room temperature to 100°C with stirring. After the reaction treatment, drying may be performed under reduced pressure to remove the acetylating reagent. When the target degree of acetyl group substitution has not been reached, the acetylation reaction and subsequent drying under reduced pressure may be repeated any number of times.

The acetylated cellulose fibers obtained through the acetylation reaction is preferably subjected to a washing treatment such as water substitution after the acetylating treatment.

In the washing treatment, dehydration may be performed as necessary. As the dehydration method, pressure dehydration using a screw press, reduced pressure dehydration by volatilization or the like can be performed, but centrifugal dehydration is preferable from the viewpoint of efficiency. The dehydration is preferably performed until the solid content in the solvent reaches about 10 to 60%.

The cellulose fibers used in the master batch A of the present invention or the acetylated cellulose fibers used in the master batch B of the present invention may be subjected to a drying treatment after dehydration in the beating treatment or dehydration in the washing treatment and before use in a pulverization treatment to be performed as necessary. The drying treatment can be performed using, for example, a microwave dryer, a blower dryer, or a vacuum dryer (reduced-pressure dryer). A dryer capable of drying while stirring, such as a drum dryer, a paddle dryer, a Nauta mixer, or a batch dryer with stirring blades, is preferable. The drying is preferably performed as much as possible until the water content of the cellulose fibers or the acetylated cellulose fibers reaches about 0.1 to 10%, preferably about 1 to 5%.

The cellulose fibers contained in the master batch A of the present invention are modified with a compound derived from urea or a derivative thereof, and acid-modified polypropylene.

The acetylated cellulose fibers contained in the master batch B of the present invention are modified with a compound derived from urea or a derivative thereof, and acid-modified polypropylene.

(Acid-modified polypropylene)

The acid-modified polypropylene contained in the master batch of the present invention is a polymer resin having a low molecular weight dicarboxylic acid capable of forming an acid anhydride such as maleic acid, succinic acid or glutaric acid on a polyolefin chain of the polypropylene. Particularly, maleic anhydride-modified polypropylene (MAPP) to which maleic acid is added is preferably used. In the present invention, the acid-modified polypropylene has a function as a compatibilizing resin. The compatibilizing resin functions to enhance uniform mixing and adhesion between cellulose fibers or acetylated cellulose fibers and a thermoplastic resin having different hydrophobicity.

The cellulose fibers modified with a compound derived from urea or a derivative thereof, and acid-modified polypropylene used in the master batch A of the present invention can be obtained, for example, by simultaneously adding cellulose fibers, acid-modified polypropylene, and urea and kneading the mixture. The acetylated cellulose fibers modified with a compound derived from urea or a derivative thereof, and acid-modified polypropylene used in the master batch B of the present invention can be obtained, for example, by simultaneously adding acetylated cellulose fibers, acid-modified polypropylene, and urea and kneading the mixture. The mechanism of the phenomenon in which the strength of the resin containing the cellulose fibers or the acetylated cellulose fibers in the polyolefin resin is improved by these operations has not been clarified at the present time, but a part thereof can be explained by considering as follows. That is, it is considered that simultaneously kneading urea which is decomposed into ammonia and isocyanic acid in a state in which the temperature exceeds 135°C with cellulose fibers or acetylated cellulose fibers allows the reaction between an unmodified hydroxyl group newly appearing from the inside of the cellulose fibers by kneading and isocyanic acid generated, and thus promotes generation of a urethane bond. It is presumed that the hydrophobicity of such cellulose fibers increases as compared with cellulose fibers or acetylated cellulose fibers not subjected to the urea treatment. It is also considered that simultaneous melt-kneading with the acid-modified polypropylene having an acid anhydride promotes the interaction between the amino group newly introduced on the surface of the cellulose fibers or the acetylated cellulose fibers by the urea treatment and the carboxylic acid of the acid-modified polypropylene, and this allows a composite of the cellulose fibers or the acetylated cellulose fibers and the acid-modified polypropylene to be more firmly formed.

In the master batch A of the present invention, the blending amount of urea required for achieving the above mechanism is preferably 10 to 100 wt%, more preferably 20 to 100 wt%, and still more preferably 30 to 70 wt%, based on 100 wt% of the total amount of a cellulose fiber component of cellulose and hemicellulose contained in the cellulose fibers (hereinafter, sometimes referred to as "cellulose amount").

In the master batch B according to the present invention, the blending amount of urea required for achieving the above-mentioned mechanism is preferably 10 to 100 wt%, more preferably 20 to 100 wt%, still more preferably 30 to 70 wt%, based on 100 wt% of the total amount of a cellulose fiber component of cellulose and hemicellulose not including an acetylated portion in the acetylated cellulose fibers (hereinafter, sometimes referred to as "cellulose amount").

Elements that determine the characteristics of the acid-modified polypropylene used in the present invention as a compatibilizing resin include the added amount of dicarboxylic acid and the weight average molecular weight of the polyolefin resin as a base material. A polyolefin resin having a large added amount of a dicarboxylic acid increases compatibility with a hydrophilic polymer such as cellulose. However, the molecular weight as a resin decreases in the addition process, resulting in decreased strength of a molded product. As an optimum balance, the added amount of dicarboxylic acid is 20 to 100 mg KOH/g, and more preferably 45 to 65 mg KOH/g. When the added amount is small, the number of points for interacting with the amino group derived from urea in the resin is reduced. In addition, when the added amount is large, the strength as a reinforced resin is not achieved due to self-aggregation caused by hydrogen bonding between carboxyl groups in the resin or the like, or a decrease in the molecular weight of the olefin resin as a base material caused by an excessive addition reaction. The molecular weight of the polyolefin resin is preferably 35,000 to 250,000, and more preferably 50,000 to 100,000. When the molecular weight is smaller than this range, the strength of the resin decreases, whereas when the molecular weight is larger than this range, the viscosity increase during melting is large, decreasing the workability during kneading and causing molding defects.

The addition amount of the acid-modified polypropylene having the above characteristics is preferably 10 to 70 wt%, and more preferably 20 to 50 wt% based on the cellulose amount. It is considered that when the addition amount exceeds 70 wt%, inhibition of introduction of isocyanic acid derived from urea into cellulose fibers and formation of a composite of acid-modified polypropylene and urea are promoted, and the effect of the present invention is not exhibited.

The acid-modified polypropylene may be used alone, or may be used as a mixed resin of two or more type.

For the master batch A and the master batch B of the present invention, when the temperature is increased at 10°C per minute under a nitrogen atmosphere, the weight loss of the master batch during temperature increase from 105°C to 300°C is 10 to 40%, and preferably 12 to 32%, and the weight loss of the master batch during temperature increase from 390°C to 880°C is 5 to 45%, and preferably 10 to 35%, based on the absolute dry weight of the master batch. Here, the weight loss during temperature increase from 105°C to 300°C is derived from the decomposition of urea and a derivative thereof, and the weight loss during temperature increase from 390°C to 880°C is derived from the decomposition of acid-modified polypropylene.

The thermal weight loss rate can be measured using, for example, a TG/DTA apparatus (manufactured by Hitachi High-Tech Science Corporation).

In the master batch A and the master batch B of the present invention, the maximum peak intensity ratio b/a when the maximum peak intensity in the closed interval [1,315 cm$^{-1}$, 1,316 cm$^{-1}$] is a and the maximum peak intensity in the open interval (750 cm$^{-1}$, 800 cm$^{-1}$) is b in an infrared absorption spectrum is larger than 0.05, and more preferably larger than 0.1 from the viewpoint of the degree of combining of cellulose fibers with a compound derived from urea. The maximum peak intensity a in the closed interval [1,315 cm$^{-1}$, 1,316 cm$^{-1}$] is a peak derived from the cellulose skeleton. The maximum peak intensity b in the open interval (750 cm$^{-1}$, 800 cm$^{-1}$) is a peak derived from the deformation vibration of the triazine ring and a peak derived from the addition of urea.

The master batch A of the present invention satisfies the following relationship, where X is a common logarithm of a value of relative tensile modulus with a value of tensile modulus of polypropylene alone being 1, and Y is a value of relative tensile strain with a value of tensile strain of a resin molded body composed only of cellulose fibers and polypropylene being 1, when a mixture obtained by adding 8 parts of polypropylene to 1 part of the total amount of a cellulose fiber component of cellulose and hemicellulose in the cellulose fibers contained in the master batch is kneaded at 180°C and molded into a dumbbell test piece, and the dumbbell test piece is subjected to a tensile test.

$$Y > -14.9X + 4.7$$

The master batch B of the present invention satisfies the following relationship, where X is a common logarithm of a value of relative tensile modulus with a value of tensile modulus of polypropylene alone being 1, and Y is a value of relative tensile strain with a value of tensile strain of a resin molded body composed only of acetylated cellulose fibers and polypropylene being 1, when a mixture obtained by adding 8 parts of polypropylene to 1 part of the total amount of a cellulose fiber component of cellulose and hemicellulose not including an acetylated portion in the acetylated cellulose fibers contained in the master batch is kneaded at 180°C and molded into a dumbbell test piece, and the dumbbell test piece is subjected to a tensile test.

$$Y > -14.9X + 4.7$$

Satisfying the above relationship indicates that both high elastic modulus and improvement in elongation, which are generally a trade-off, can be achieved.

The method for producing the master batch of the present invention is not particularly limited. For example, the master batch can be obtained by simultaneously charging cellulose fibers or acetylated cellulose fibers, acid-modified polypropylene, and urea into a kneading machine and kneading the mixture.

(Pretreatment before kneading-pulverization)

A step of pulverizing cellulose fibers or acetylated cellulose fibers may be provided before the kneading. Use of pulverized cellulose fibers or acetylated cellulose fibers appropriately disintegrate fiber lumps of cellulose fibers or acetylated cellulose fibers at the time of charging these fibers into the kneading machine. This can suppress occurrence of a bridge (clogging) in the charging port (chute portion) or poor biting of pulp into the screw.

The pulverized cellulose fibers or acetylated cellulose fibers are preferably used by being passed through a screen. A screen having a diameter of 1 mm or more and 5 mm or less, preferably a diameter of 3 mm or more and 5 mm or less is preferably used. The cellulose fibers or acetylated cellulose fibers thus obtained preferably have a weighted average fiber length (length average fiber length) of about 0.20 to 1.5 mm, and more preferably 0.30 to 1.0 mm.

As the cellulose fibers or acetylated cellulose fibers to be pulverized, those dried are preferably used from the viewpoint of reducing the drying load during kneading.

(Kneading)

In the kneading, cellulose fibers or acetylated cellulose fibers having a weighted average fiber length of preferably 0.20 to 1.50 mm, more preferably 0.30 to 1.00 mm, acid-modified polypropylene, and urea are simultaneously charged into a kneading machine, and melt-kneaded. The weighted average fiber length (length average fiber length) of the cellulose fibers or the acetylated cellulose fibers can be measured using a fiber tester (manufactured by Lorentzen & Wettre) or the like. Various commercially available feeders and side feeders can be used when charging materials into the kneading machine. When acid-modified polypropylene and urea are pulverized in advance, it is possible to mix cellulose fibers or acetylated cellulose fibers, acid-modified polypropylene, and urea by a commercially available mixer or the like before charging, and then charging the mixture. Even when acid-modified polypropylene or the like is not pulverized, charging can be performed by, for example, preparing a plurality of feeders such as a feeder for pellets and a feeder for cellulose fibers or acetylated cellulose fibers. In the kneading, the blending amount of a cellulose fiber component of the cellulose fibers or acetylated cellulose fibers to be charged into the kneading machine is preferably 35 to 85 wt%, and more preferably 40 to 65 wt%, based on the total amount of the cellulose fibers or the acetylated cellulose fibers, the acid-modified polypropylene, and the urea.

(Kneading machine)

The kneading machine to be used in the kneading is preferably a kneading machine capable of melt-kneading acid-modified polypropylene and urea, and having a strong kneading force to promote nano-defibration of cellulose fibers or acetylated cellulose fibers. The kneading machine is desirably a multi-screw kneading machine such as a twin screw kneading machine or a quad screw kneading machine, and is configured to have a plurality of kneadings or rotors as parts constituting the screw. A kneading machine such as a bench roll, a Banbury mixer, a kneader, or a planetary mixer may be used for example, as long as the kneading force equivalent to that described above can be secured. In order to remove moisture associated with the cellulose fibers and volatilized urea, kneading is preferably performed in a part or the whole of the inside of the barrel of the kneading machine under reduced pressure.

The set temperature of the melt-kneading can be adjusted in accordance with the melting temperature of the acid-modified polypropylene to be used. When maleic anhydride-modified polypropylene suitable for the present invention is used as the acid-modified polypropylene, the temperature is preferably 135°C or higher in order to promote decomposition of urea, and more preferably 160°C or higher at which the acid-modified polypropylene having a dicarboxylic acid residue capable of forming an acid anhydride is melted and the terminal of a part of the dicarboxylic acid residue is ring-closed by dehydration. With the above temperature setting, isocyanic acid is generated from urea to form a urethane bond with the unmodified hydroxyl group on the cellulose fibers. Thereby, the introduction of an amino group on the cellulose fibers is achieved, enabling the interaction with the acid-modified polypropylene to be promoted. In addition, with the above temperature, the dicarboxylic acid residue in the acid-modified polypropylene is ring-closed to form an acid anhydride. This causes an esterification reaction with cellulose fibers or acetylated cellulose fibers, and allows formation of a stronger resin composite. On the other hand, when the kneading temperature exceeds 200°C, deterioration of the polypropylene resin as a base material starts, resulting in decrease in strength.

The cellulose fibers or the acetylated cellulose fibers, the acid-modified polypropylene, and the urea charged into the kneading machine during kneading are melt-kneaded, and at least a part of the cellulose fibers or the acetylated cellulose fibers is defibrated by a shear force generated during melt-kneading, whereby a master batch containing cellulose nanofibers or acetylated cellulose nanofibers are prepared.

The cellulose nanofibers (including acetylated cellulose nanofibers) are preferably fine fibers having a fiber diameter of about 1 to 1,000 nm and an aspect ratio of 100 or more. In the master batch of the present invention, the cellulose nanofibers may occupy more than half, and non-defibrated fibers may be contained in the master batch.

(Washing)

The master batch of the present invention may be washed with water after the kneading. It is considered that water washing removes most of the residual urea in the master batch and by-products (biuret, cyanuric acid, melamine, etc.) derived from urea that can be produced in a trace amount in the kneading, and thus eliminates aggregation of fibers and the like caused by the residual urea and the by-products. Therefore, the resin molded body obtained using the master batch after washing is excellent in tensile strength and elongation.

The method for washing the master batch obtained by the kneading with water may be any method as long as it can stir or disperse the master batch. Examples thereof include known stirrers or dispersers including stirring with a three-one motor, agitators, homomixers, homogenizers, and mixers.

The temperature of water used in washing is room temperature to 100°C, preferably 50 to 100°C, more preferably 60 to 90°C, and still more preferably 60 to 80°C from the viewpoint of improving the solubility of residual urea and by-products thereof. The washing time is preferably 10 minutes to 24 hours in total, and in consideration of efficiency, more preferably 0.5 hours to 5 hours, and still more preferably 1 hour to 3 hours. From the viewpoint of chemical equilibrium, the water is replaced 0 to 10 times, preferably 1 to 5 times, within the washing time. The wt% of the kneaded product obtained in the kneading step in water during washing is preferably 0.1 to 50 wt%, and more preferably 0.1 to 15 wt% from the viewpoint of chemical equilibrium. Further, washing is preferably performed until the amount of residual urea is less than 1%, particularly less than 0.1%. Since the thermal decomposition start temperature of urea is 135°C, the amount of residual urea can be determined from, for example, the weight loss when heating at 140°C for 270 minutes.

When the master batch of the present invention is produced, it is preferable to dry and use the kneaded product washed above from the viewpoint of preventing ring closing and ring opening of the modification group in the compatibilizer in kneading for dilution, preventing decomposition of the cellulose fibers or the acetylated cellulose fibers or the thermoplastic resin used as a resin for dilution due to remaining water, and reducing the drying load during kneading. The drying treatment can be performed using, for example, a microwave dryer, a blower dryer, or a vacuum dryer. A dryer capable of drying while stirring, such as a drum dryer, a paddle dryer, a Nauta mixer, or a batch dryer with stirring blades, is preferable. The drying is preferably performed until the water content of the kneaded product reaches about 0.1 to 5%.

(Resin composition)

A resin composition A can be obtained by adding a thermoplastic resin to the master batch A of the present invention and, for example, melt-kneading the mixture (kneading for dilution). A resin composition B can be obtained by adding a thermoplastic resin to the master batch B of the present invention and, for example, melt-kneading the mixture (kneading for dilution).

(Thermoplastic resin)

As the thermoplastic resin used in the present invention, the following general thermoplastic resins having a melting temperature of 250°C or lower can be used.

That is, polyolefin resin, polyamide resin, polyvinyl chloride, polystyrene, polyvinylidene chloride, fluororesin, (meth)acrylic resin, polyester, polylactic acid, copolymer resin of lactic acid and an ester, polyglycolic acid, an acrylonitrile-butadiene-styrene copolymer (ABS resin), polyphenylene oxide, polyurethane, polyacetal, vinyl ether resin, polysulfone resin, cellulose resin (triacetylated cellulose, diacetylated cellulose, etc.), and the like can be used.

As the polyolefin resin, polyethylene, polypropylene (hereinafter also referred to as "PP"), an ethylene-propylene copolymer, polyisobutylene, polyisoprene, polybutadiene, or the like can be used. From the viewpoint of interaction with the compatibilizing resin, polypropylene is preferably used when MAPP is used.

The content of the thermoplastic resin in the resin composition A of the present invention is preferably 220 to 984 wt%, more preferably 330 to 940 wt%, and still more preferably 452 to 925 wt%, based on 100 wt% of the total amount of a cellulose fiber component of cellulose and hemicellulose in the cellulose fibers contained in the master batch, from the viewpoint of obtaining a reinforcing effect while maintaining low density.

The content of the thermoplastic resin in the resin composition B of the present invention is preferably 107 to 983 wt%, more preferably 229 to 937 wt%, and still more preferably 341 to 920 wt%, based on 100 wt% of the total amount of a cellulose fiber component of cellulose and hemicellulose not including an acetylated portion in the acetylated cellulose fibers contained in the master batch, from the viewpoint of obtaining a reinforcing effect while maintaining low density.

(Kneading for dilution)

The method for adding the thermoplastic resin to the master batch of the present invention and kneading the mixture for dilution is not particularly limited. For example, the two components may be mixed at room temperature without heating and then melt-kneaded, or may be mixed while being heated and melt-kneaded.

As the kneading machine in the case of adding the thermoplastic resin and melt-kneading the mixture, the same kneading machine as the kneading machine used in the above kneading can be used. The melt-kneading temperature can be adjusted in accordance with the acid-modified polypropylene (compatibilizing resin) used in the kneading. The heating set temperature during melt-kneading is preferably about ± 20°C which is the minimum processing temperature recommended by the thermoplastic resin supplier. When polypropylene is used as the thermoplastic resin, the melt-kneading temperature is preferably 140 to 230°C, and more preferably 160 to 200°C. Setting the mixing temperature to this temperature range allows the cellulose fibers or the acetylated cellulose fibers and the resin to be uniformly mixed.

The resin composition of the present invention may further contain, for example, a surfactant; polysaccharides such as starches and alginic acid; natural proteins such as gelatin, glue, and casein; an inorganic compound such as tannin, zeolite, ceramics, and metal powder; a colorant; a plasticizer; a flavoring agent; a pigment; a fluidity control agent; a leveling agent; a conductive agent; an antistatic agent; an ultraviolet absorber; an ultraviolet dispersant; an additive such as a deodorant and an antioxidant. The optional additive may be appropriately contained in any content as long as the effect of the present invention is not impaired.

According to the present invention, it is possible to provide a master batch and a resin composition capable of providing a resin molded body achieving high tensile modulus and improvement in elongation.

Examples

Hereinafter, the present invention will be described in more detail with reference to Examples, but the present invention is not limited thereto.

(Method for measuring degree of substitution (DS) with acetyl group)

(Measurement of DS by back titration)

A sample of acetylated cellulose fibers was dried, and 0.5 g (A) was accurately weighed. Thereto was added 75 mL of ethanol and 50 mL (0.025 mol) (B) of 0.5N NaOH, and the mixture was stirred for 3 to 4 hours. This was filtered, washed with water, and dried, and the sample on the filter paper was subjected to FT-IR measurement to confirm that the absorption peak based on the carbonyl of the ester bond had disappeared, that is, the ester bond had been hydrolyzed.
The filtrate was used for back titration as described below.
The filtrate contains sodium acetate resulting from hydrolysis and excess NaOH added. The neutralization titration of NaOH was performed with 1N HCl (phenolphthalein was used as an indicator).

- $$0.025 \text{ mol (B)} - (\text{number of moles of HCl used for neutralization})$$
$$= \text{number of moles (C) of acetyl groups that have formed an ester bond with the hydroxyl group of cellulose or the like}$$

- $$(\text{Molecular weight of cellulose repeating unit: } 162 \times \text{number of moles of cellulose repeating unit (unknown (D)))}$$
$$+ (\text{molecular weight of acetyl group: } 43 \times (C))$$
$$= 0.5 \text{ g (A) of weighed sample}$$

The number of moles (D) of the cellulose repeating unit was calculated by the above equation.
DS was calculated by the following equation.

- $$DS = (C)/(D)$$

(Measurement of thermal weight loss rate)

The thermal weight loss rate was measured for 10 mg of the master batch obtained in each of Examples and Comparative Examples. The temperature conditions were as follows: the temperature was held at 105°C for 10 minutes, and then raised to 900°C at 10°C per minute. The measurement was performed under a nitrogen atmosphere. The weight loss during temperature increase from 105°C to 300°C and the weight loss during temperature increase from 390°C to 880°C are shown in Table 1 and Table 2. The weight loss during temperature increase from 105°C to 300°C is derived from the amount of urea or a compound derived from urea, and the weight loss during temperature increase from 390°C to 880°C is derived from the amount of acid-modified polypropylene used as the compatibilizing resin.

(Measurement of infrared absorption spectrum)

The infrared absorption spectrum (IR spectrum) was measured for the master batches obtained in Examples and Comparative Examples under absolutely dried condition. Table 1 and Table 2 show the maximum peak intensity ratio b/a when the maximum peak intensity in the closed interval [1,315 cm$^{-1}$, 1,316 cm$^{-1}$] is a, and the maximum peak intensity in the open interval (750 cm$^{-1}$, 800 cm$^{-1}$) is b in the IR spectrum. The maximum peak intensity a is a peak derived from the cellulose skeleton. The maximum peak intensity b is a peak derived from the deformation vibration of the triazine ring and a peak derived from the addition of urea. Satisfying the relationship of b/a > 0.05 indicates that the master batch is obtained by kneading with urea, and is a resin composite in which cellulose fibers or acetylated cellulose fibers and a compound derived from urea are combined.

(Measurement of tensile modulus and tensile strain)

The resin compositions obtained in Examples and Comparative Examples were charged into a pelletizer to obtain a pellet-shaped resin molded body. A small molding machine ("MC15" manufactured by Xplore Instruments) was charged with 150 g of the pellet-shaped resin molded body, and a dumbbell test piece (type A12, JIS K 7139) was molded under the conditions of a heating cylinder (cylinder) temperature of 200°C and a mold temperature of 40°C. The tensile modulus and tensile strain (strain and elongation at break) of each of the obtained test pieces were measured at a test speed of 1 mm/min and an initial distance between gauge marks of 30 mm using a precision universal tester ("Autograph AG-Xplus" manufactured by Shimadzu Corporation). Among the measured values, the ratio of the measured value of each sample when the tensile modulus of PP as a resin for dilution is defined as 1 is taken as the relative tensile modulus, and the results are shown in Table 1 and Table 2. In addition, the ratio of the measured value of each of the samples when the value of the tensile strain of a resin molded body composed only of cellulose fibers and PP is defined as 1 is taken as the relative tensile strain, and the results are shown in Table 1. The ratio of the measured value of each of the samples when the value of the tensile strain of a resin molded body composed only of acetylated cellulose fibers and PP is defined 1 is taken as the relative tensile strain, and the results are shown in Table 2. Satisfying the following relationship when the common logarithm of the relative tensile modulus is defined as X and the value of the relative tensile strain is defined as Y indicates that both high tensile modulus and improvement in elongation are achieved.

$$Y > -14.9X + 4.7$$

A resin molded body composed only of cellulose fibers and PP was obtained by the following method. Water-containing softwood unbleached kraft pulp (NUKP) was subjected to a dry pulverization treatment with a SUPER MIXER (SMV-Ba manufactured by KAWATA MFG. Co., Ltd.). The fiber length of the cellulose fibers was measured with a fiber tester (manufactured by Lorentzen & Wettre), and the weighted average fiber length thereof was 0.98 mm. The obtained cellulose fibers (394.2 g as an absolute dry product, of which the cellulose amount (the total amount of cellulose and hemicellulose not including lignin): 360 g) and a polypropylene resin (108 g) were placed in a polyethylene bag and mixed with shaking. A kneading machine was charged with 502.2 g of the obtained mixture using a feeder (manufactured by Technovel Corporation) attached to the twin screw kneading machine, and the mixture was kneaded at 180°C to produce a master batch. PP as a thermoplastic resin was added to the obtained master batch in an amount of 861 parts based on 100 parts by weight of the cellulose amount in the cellulose fibers, and the mixture was kneaded at 180°C with the twin screw kneading machine to obtain a resin composition. The obtained resin composition was charged into a pelletizer to obtain a pellet-shaped resin molded body.

A resin molded body composed only of acetylated cellulose fibers and PP was obtained by the following method. A stirrer ("FM150L" manufactured by Nippon Coke & Engineering. Co., Ltd.) was charged with 20 kg (solid content: 10 kg) of water-containing softwood unbleached kraft pulp (NUKP), and then stirring was started, and the pulp was dehydrated under reduced pressure at 80°C. Next, 4.0 kg of acetic anhydride was added, and the mixture was reacted at 80°C for 2 hours. After the reaction, the mixture was washed with water to obtain acetylated cellulose fibers (acetylated modified NUKP). The acetyl cellulose fibers were further pulverized by a pulverizer ("UGO3-280XKFT" manufactured by Horai Co., Ltd., rotary blade type: open straight cutter), and passed through a screen having a diameter of 1 mm to prepare acetylated cellulose fibers. The water content of the acetylated cellulose fibers was 2.7 wt%. The degree of substitution (DS) with acetyl group of the acetylated cellulose fibers was 0.7. The fiber length of the acetylated cellulose fibers was measured with a fiber tester (manufactured by Lorentzen & Wettre), and the weighted average fiber length thereof was 0.95 mm. The obtained acetylated cellulose fibers (465.8 g as an absolute dry product, of which the cellulose amount (the total amount of cellulose and hemicellulose not including lignin): 360 g) and a polypropylene resin (108 g) were placed in a polyethylene bag and mixed with shaking. A kneading machine was charged with 573.8 g of the obtained mixture using a feeder (manufactured by Technovel Corporation) attached to the twin screw kneading machine, and the mixture was kneaded at 180°C to produce a master batch. PP as a thermoplastic resin was added to the obtained master batch in an amount of 841 parts based on 100 parts by weight of the amount of a cellulose fiber component derived from acetylated cellulose fibers, and the mixture was kneaded at 180°C with the twin screw kneading machine to obtain a resin composition. The obtained resin composition was charged into a pelletizer to obtain a pellet-shaped resin molded body.

(Kneading machine and operating conditions used in production of master batch and resin composition)
"MFU15TW-45HG-NH" twin screw kneading machine manufactured by Technovel Corporation
Screw diameter: 15 mm, L/D: 45, treatment speed: 300 g/hour
The screw rotation speed was 200 rpm.

(Materials used for production of master batch and resin composition)

(a) Cellulose fibers or acetylated cellulose fibers
(b) Acid-modified polypropylene (compatibilizing resin)

- Maleic anhydride-modified polypropylene (MAPP): (TOYO-TACK PMA-H1000P manufactured by Toyobo Co., Ltd.: added amount of dicarboxylic acid: 57 mg KOH/g)

(c) Urea: (manufactured by Wako Pure Chemical Industries, Ltd.)
(d) Thermoplastic resin

- Polypropylene (PP): (PP MA04A manufactured by Japan Polypropylene Corporation)

(Example 1)

(Preparation of cellulose fibers 1)

A stirrer ("FM150L" manufactured by Nippon Coke & Engineering. Co., Ltd.) was charged with 20 kg (solid content: 10 kg) of water-containing softwood unbleached kraft pulp (NUKP) subjected to a beating treatment until the CSF thereof became 150 mL, then stirring was started, and the pulp was dehydrated under reduced pressure at 80°C. The water content of the obtained cellulose fibers 1 was measured with an infrared moisture meter. The water content was 1.7 wt%. The fiber length of the cellulose fibers was measured with a fiber tester (manufactured by Lorentzen & Wettre), and the weighted average fiber length thereof was 0.90 mm.

(Production of master batch)

Cellulose fibers 1 (438 g as an absolute dry product, of which the cellulose amount (the total amount of cellulose and hemicellulose): 400 g) subjected to the beating treatment, powdery compatibilizing resin (MAPP: 120 g), and powdery urea (200 g: blending amount of 50% with respect to the cellulose amount) were placed in a polyethylene bag and mixed with shaking. A kneading machine was charged with 758 g of the obtained mixture using a feeder (manufactured by Technovel Corporation) attached to the twin screw kneading machine, and the mixture was kneaded at 180°C to produce a master batch.

(Washing)

The master batch (600 g) obtained above was washed with 7.5 L of hot water at 80°C for 2 hours. Hot water was exchanged once during washing. Stirring was performed using an AUTO MIXER model 40, manufactured by PRIMIX Corporation. The temperature was maintained by a water bath. The washed master batch was charged into a dryer and dried at 105°C overnight (or until constant weight).

(Production of resin composition)

PP as a thermoplastic resin was added to the master batch obtained after washing and drying in an amount of 8 parts per 1 part of the amount of a cellulose fiber component contained in the master batch, and the mixture was kneaded at 180°C with the twin screw kneading machine to obtain a resin composition.

(Example 2)

A master batch was produced in the same manner as in Example 1 except that NUKP which had been subjected to a dry pulverization treatment with a SUPER MIXER (SMV-Ba manufactured by KAWATA MFG. Co., Ltd.) but had not been subjected to a beating treatment was used in place of the cellulose fibers 1 and the addition amount of urea was changed to 280 g (blending amount of 70% with respect to the cellulose amount). A resin composition was produced in the same manner as in Example 1 except that the obtained master batch was used as it was without performing washing and subsequent drying. The fiber length of the cellulose fibers was measured with a fiber tester (manufactured by Lorentzen & Wettre), and the weighted average fiber length thereof was 0.98 mm.

(Example 3)

A master batch was produced in the same manner as in Example 1, and a resin composition was produced in the same manner as in Example 1 except that the obtained master batch was used as it was without performing washing and subsequent drying.

(Comparative Example 1)

A master batch was produced in the same manner as in Example 1 except that NUKP which had been subjected to the same dry pulverization treatment as in Example 2 but had not been subjected to a beating treatment was used in place of the cellulose fibers 1 and urea was not added. A resin composition was produced in the same manner as in Example 1 except that the obtained master batch was used as it was without performing washing and subsequent drying.

[Table 1]

| | | Reference Example 1 (only PP) | Example 1 | Example 2 | Example 3 | Comparative Example 1 |
|---|---|---|---|---|---|---|
| Treatment of cellulose fibers | Beating treatment | - | Yes | No | Yes | No |
| | Acetylation modification | - | No | No | No | No |
| Urea | Addition amount (% with respect to cellulose amount) | - | 50 | 70 | 50 | - |
| Presence of washing step | | - | Yes | No | No | No |
| Evaluation of master batch | Absorbance ratio b/a | - | 0.16 | 0.42 | 0.35 | 0(∗1) |
| | (105°C to 300°C) weight loss rate (%) | - | 24.9 | 20.6 | 21.8 | 9.8 |
| | (390°C to 880°C) weight loss rate (%) | - | 19.5 | 18.4 | 25.1 | 25.4 |
| Type of thermoplastic resin | | PP | PP | PP | PP | PP |
| Evaluation of resin molded body | Relative tensile modulus | 1 | 2.2 | 2.9 | 2.4 | 1.7 |
| | X: $\log_{10}$ (relative tensile modulus) | 0.0 | 0.34 | 0.46 | 0.38 | 0.23 |
| | -14.9X+4.7 | 4.70 | -0.33 | -2.15 | -1.00 | 1.22 |
| | Y: relative tensile strain | - | 0.79 | 0.16 | 0.30 | 0.94 |
| | Y>-14.9X+4.7 | - | Satisfied | Satisfied | Satisfied | Not satisfied |
| * 1: There is no maximum value b of peak intensity in open interval | | | | | | |

As shown in Table 1, when the master batch A of the present invention containing cellulose fibers modified with a compound derived from urea or a derivative thereof, acid-modified polypropylene, and the acid-modified polypropylene, in which the weight loss during temperature increase to a specific temperature and the absorbance ratio in a specific region satisfy specific ranges, was used, an excellent molded body having both high tensile strength and improvement in elongation could be obtained.

(Example 4)

(Preparation of acetylated cellulose fibers 1)

A stirrer ("FM150L" manufactured by Nippon Coke & Engineering. Co., Ltd.) was charged with 20 kg (solid content: 10 kg) of water-containing softwood unbleached kraft pulp (NUKP) subjected to a beating treatment until the CSF thereof became 180 mL, then stirring was started, and the pulp was dehydrated under reduced pressure at 80°C. Next, 4.0 kg of acetic anhydride was added, and the mixture was reacted at 80°C for 2 hours. After the reaction, the mixture was washed with water to obtain acetylated cellulose fibers 1 (acetylated modified NUKP). Then, the acetylated cellulose fibers 1 were charged into a dryer and dried under reduced pressure at 60 to 70°C. The water content of the obtained acetylated cellulose fibers 1 was measured with an infrared moisture meter. The water content was 2.5 wt%. The degree of substitution (DS) with acetyl group of the acetylated cellulose fibers 1 was 1.0. The fiber length of the acetylated cellulose fibers 1 was measured with a fiber tester (manufactured by Lorentzen & Wettre), and the weighted average fiber length thereof was 0.85 mm.

(Production of master batch)

Acetylated cellulose fibers 1 (483.7 g as an absolute dry product, of which the cellulose amount (the total amount of cellulose and hemicellulose not including an acetylated portion): 360 g) subjected to the beating treatment, powdery compatibilizing resin (MAPP: 108 g), and powdery urea (180 g: blending amount of 50% with respect to the cellulose amount) were placed in a polyethylene bag and mixed with shaking. A kneading machine was charged with 771.7 g of the obtained mixture using a feeder (manufactured by Technovel Corporation) attached to the twin screw kneading machine, and the mixture was kneaded at 180°C to produce a master batch.

(Washing)

The master batch (600 g) obtained above was washed with 7.5 L of hot water at 80°C for 2 hours. Hot water was exchanged once during washing. Stirring was performed using an AUTO MIXER model 40, manufactured by PRIMIX Corporation. The temperature was maintained by a water bath. The washed master batch was charged into a dryer and dried at 105°C overnight (or until constant weight).

(Production of resin composition)

PP as a thermoplastic resin was added to the master batch obtained after washing and drying in an amount of 8 parts per 1 part of the amount of a cellulose fiber component derived from acetylated cellulose fibers, and the mixture was kneaded at 180°C with the twin screw kneading machine to obtain a resin composition.

(Example 5)

(Preparation of acetylated cellulose fibers 2)

A stirrer ("FM150L" manufactured by Nippon Coke & Engineering. Co., Ltd.) was charged with 20 kg (solid content: 10 kg) of water-containing softwood unbleached kraft pulp (NUKP) subjected to a beating treatment until the CSF thereof became 150 mL, then stirring was started, and the pulp was dehydrated under reduced pressure at 80°C. Next, 4.0 kg of acetic anhydride was added, and the mixture was reacted at 80°C for 2 hours. After the reaction, the mixture was washed with water to obtain acetylated cellulose fibers 2 (acetylated modified NUKP). Then, the acetylated cellulose fibers 2 were charged into a dryer and dried under reduced pressure at 60 to 70°C. The water content of the obtained acetylated cellulose fibers 2 was measured with an infrared moisture meter. The water content was 2.3 wt%. The degree of substitution (DS) with acetyl group of the acetylated cellulose fibers 2 was 0.7. The fiber length of the acetylated cellulose fibers 2 was measured with a fiber tester (manufactured by Lorentzen & Wettre), and the weighted average fiber length thereof was 0.664 mm.

(Production of master batch)

A master batch was produced in the same manner as in Example 4 except that the acetylated cellulose fibers 2 were used in place of the acetylated cellulose fibers 1.

(Production of resin composition)

A resin composition was obtained in the same manner as in Example 4 except that the master batch obtained above was used without performing washing and subsequent drying.

(Example 6)

A master batch was produced in the same manner as in Example 5. The obtained master batch was washed in the same manner as in Example 4 except that washing was performed with water at room temperature for 80 minutes in place of washing with hot water at 80°C for 2 hours, and then dried. Using the master batch thus obtained, a resin composition was obtained in the same manner as in Example 4.

(Example 7)

A master batch was produced in the same manner as in Example 5. The obtained master batch was washed in the same manner as in Example 4 except that washing was performed with hot water at 80°C for 2 hours, the hot water was exchanged, and this operation was further repeated twice, and then dried. Using the master batch thus obtained, a resin composition was obtained in the same manner as in Example 4.

(Comparative Example 2)

(Preparation of acetylated cellulose fibers 3)

A stirrer ("FM150L" manufactured by Nippon Coke & Engineering. Co., Ltd.) was charged with 20 kg (solid content: 10 kg) of water-containing softwood unbleached kraft pulp (NUKP) subjected to a beating treatment until the CSF thereof became 110 mL, then stirring was started, and the pulp was dehydrated under reduced pressure at 80°C. Next, 4.0 kg of acetic anhydride was added, and the mixture was reacted at 80°C for 2 hours. After the reaction, the mixture was washed with water to obtain acetylated cellulose fibers 3 (acetylated modified NUKP). Then, the acetylated cellulose fibers 3 were charged into a dryer and dried under reduced pressure at 60 to 70°C. The water content of the obtained acetylated cellulose fibers 3 was measured with an infrared moisture meter. The water content was 2.0 wt%. The degree of substitution (DS) with acetyl group of the acetylated cellulose fibers 3 was 0.6. The fiber length of the acetylated cellulose fibers 3 was measured with a fiber tester (manufactured by Lorentzen & Wettre), and the weighted average fiber length thereof was 0.54 mm.

A master batch was produced in the same manner as in Example 4 except that the acetylated cellulose fibers 3 were used in place of the acetylated cellulose fibers 1 and urea was not added. A resin composition was produced in the same manner as in Example 4 except that the obtained master batch was used as it was without performing washing and subsequent drying.

(Comparative Example 3)

Acetylated cellulose fibers were obtained by performing an acetylation reaction, washing, and drying under reduced pressure in the same manner as in Example 5 except that NUKP without a beating treatment was used. The acetyl cellulose fibers were further pulverized by a pulverizer ("UGO3-280XKFT" manufactured by Horai Co., Ltd., rotary blade type: open straight cutter), and passed through a screen having a diameter of 1 mm to prepare acetylated cellulose fibers 4. The water content of the acetylated cellulose fibers was 2.7 wt%. The degree of substitution (DS) with acetyl group of the acetylated cellulose fibers 4 was 0.7. The fiber length of the acetylated cellulose fibers 4 was measured with a fiber tester (manufactured by Lorentzen & Wettre), and the weighted average fiber length thereof was 0.95 mm. A master batch and a resin composition were produced in the same manner as in Comparative Example 2 except that the acetylated cellulose fibers 4 were used in place of the acetylated cellulose fibers 3.

[Table 2]

| | | Reference Example 1 (only PP) | Example 4 | Example 5 | Example 6 | Example 7 | Comparative Example 2 | Comparative Example 3 |
|---|---|---|---|---|---|---|---|---|
| Treatment of cellulose fibers | Beating treatment | - | Yes | Yes | Yes | Yes | Yes | No |
| | Acetylation modification | - | Yes | Yes | Yes | Yes | Yes | Yes |
| Urea | Addition amount (% with respect to cellulose amount) | - | 50 | 50 | 50 | 50 | - | - |
| Presence of washing step | | - | Yes | Yes | Yes | Yes | No | No |
| Evaluation of master batch | Absorbance ratio b/a | - | 0.16 | 0.45 | 0.53 | 0.10 | 0(*1) | 0(*1) |
| | (105°C to 300°C) weight loss rate (%) | - | 24.1 | 17.2 | 24.6 | 25.9 | 3.7 | 3.0 |
| | (390°C to 880°C) weight loss rate (%) | - | 18.0 | 16.8 | 17.4 | 17.6 | 18.0 | 20.9 |
| Type of thermoplastic resin | | PP | PP | PP | PP | PP | PP | PP |
| Evaluation of resin molded body | Relative tensile modulus | 1 | 2.02 | 2.65 | 2.22 | 2.00 | 1.61 | 1.71 |
| | X: $\log_{10}$ (relative tensile modulus) | 0.0 | 0.30 | 0.42 | 0.35 | 0.30 | 0.21 | 0.23 |
| | -14.9X+4.7 | 4.7 | 0.2 | -1.6 | -0.5 | 0.2 | 1.6 | 1.2 |
| | Y: relative tensile strain | - | 0.67 | 0.43 | 0.71 | 0.75 | 1.13 | 1.09 |
| | Y>-14.9X+4.7 | - | Satisfied | Satisfied | Satisfied | Satisfied | Not satisfied | Not satisfied |

*1: There is no maximum value b of peak intensity in open interval

As shown in Table 2, when the master batch B of the present invention containing acetylated cellulose fibers modified with a compound derived from urea or a derivative thereof, acid-modified polypropylene, and the acid-modified polypropylene, in which the weight loss during temperature increase to a specific temperature and the absorbance ratio in a specific region satisfy specific ranges, was used, an excellent molded body having both high tensile strength and improvement in elongation could be obtained.

**Claims**

1. A master batch comprising: cellulose fibers modified with a compound derived from urea or a derivative thereof, and acid-modified polypropylene; and the acid-modified polypropylene, wherein the master batch satisfies following conditions (A) and (B):

    (A) when temperature is increased at 10°C per minute under a nitrogen atmosphere,

    a weight loss of the master batch during temperature increase from 105°C to 300°C is 10 to 40%, and
    a weight loss of the master batch during temperature increase from 390°C to 880°C is 5 to 45%, based on an absolute dry weight of the master batch; and

    (B) a following relationship is satisfied:

    $$b/a > 0.05$$

    where a is a maximum peak intensity in a closed interval [1,315 cm$^{-1}$, 1,316 cm$^{-1}$], and b is a maximum peak intensity in an open interval (750 cm$^{-1}$, 800 cm$^{-1}$) in an infrared absorption spectrum of the master batch.

2. The master batch according to claim 1, further satisfying a following condition (C):
    (C) a following relationship is satisfied:

    $$Y > -14.9X + 4.7$$

    where X is a common logarithm of a value of relative tensile modulus with a value of tensile modulus of polypropylene alone being 1, and Y is a value of relative tensile strain with a value of tensile strain of a resin molded body composed only of cellulose fibers and polypropylene being 1, when a mixture obtained by adding 8 parts of polypropylene to 1 part of a total amount of a cellulose fiber component of cellulose and hemicellulose in the cellulose fibers contained in the master batch is kneaded at 180°C and molded into a dumbbell test piece, and the dumbbell test piece is subjected to a tensile test.

3. A resin composition comprising: the master batch according to claim 1 or 2; and a thermoplastic resin, wherein a content of the thermoplastic resin is 220 to 984 wt% based on 100 wt% of a cellulose fiber component of cellulose and hemicellulose in the cellulose fibers contained in the master batch.

4. A master batch comprising: acetylated cellulose fibers modified with a compound derived from urea or a derivative thereof, and acid-modified polypropylene; and the acid-modified polypropylene, wherein the master batch satisfies following conditions (A) and (B):

    (A) when temperature is increased at 10°C per minute under a nitrogen atmosphere,

    a weight loss of the master batch during temperature increase from 105°C to 300°C is 10 to 40%, and
    a weight loss of the master batch during temperature increase from 390°C to 880°C is 5 to 45%, based on an absolute dry weight of the master batch; and

    (B) a following relationship is satisfied:

    $$b/a > 0.05$$

where a is a maximum peak intensity in a closed interval [1,315 cm$^{-1}$, 1,316 cm$^{-1}$], and b is a maximum peak intensity in an open interval (750 cm$^{-1}$, 800 cm$^{-1}$) in an infrared absorption spectrum of the master batch.

5. The master batch according to claim 4, further satisfying a following condition (C):
(C) a following relationship is satisfied:

$$Y > -14.9X + 4.7$$

where X is a common logarithm of a value of relative tensile modulus with a value of tensile modulus of polypropylene alone being 1, and Y is a value of relative tensile strain with a value of tensile strain of a resin molded body composed only of acetylated cellulose fibers and polypropylene being 1, when a mixture obtained by adding 8 parts of polypropylene to 1 part of a total amount of a cellulose fiber component of cellulose and hemicellulose not including an acetylated portion in the acetylated cellulose fibers contained in the master batch is kneaded at 180°C and molded into a dumbbell test piece, and the dumbbell test piece is subjected to a tensile test.

6. A resin composition comprising: the master batch according to claim 4 or 5; and a thermoplastic resin, wherein a content of the thermoplastic resin is 107 to 983 wt% based on 100 wt% of a cellulose fiber component of cellulose and hemicellulose not including an acetylated portion in the acetylated cellulose fibers contained in the master batch.

## INTERNATIONAL SEARCH REPORT

| | International application No. |
|---|---|
| | PCT/JP2020/045054 |

### A. CLASSIFICATION OF SUBJECT MATTER

C08J 3/22(2006.01)i; C08K 7/02(2006.01)i; C08K 9/04(2006.01)i; C08L 1/02(2006.01)i; C08L 1/12(2006.01)i; C08L 23/26(2006.01)i; C08J 5/06(2006.01)i
FI:     C08J3/22 CES; C08L1/12; C08L23/26; C08L1/02; C08K9/04; C08K7/02; C08J5/06

According to International Patent Classification (IPC) or to both national classification and IPC

### B. FIELDS SEARCHED

Minimum documentation searched (classification system followed by classification symbols)
C08J3/22; C08K7/02; C08K9/04; C08L1/02; C08L1/12; C08L23/26; C08J5/06

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
JSTPlus/JMEDPlus/JST7580 (JDreamIII); Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2017-105983 A (KYOTO UNIVERSITY) 15 June 2017 (2017-06-15) claims, paragraph [0107], examples (in particular, paragraphs [0350]-[0358]) | 3<br>1, 2<br>4-6 |
| X<br>Y<br>A | JP 2019-001876 A (KYOTO UNIVERSITY) 10 January 2019 (2019-01-10) claims, paragraph [0069], example 3 | 3<br>1, 2<br>4-6 |
| Y | JP 2015-059206 A (SEIKO PMC CORPORATION) 30 March 2015 (2015-03-30) claims, paragraphs [0005]-[0007], example 25 | 1, 2 |
| A | JP 2019-131792 A (I-COMPOLOGY CORPORATION) 08 August 2019 (2019-08-08) claims, paragraph [0053] | 1-6 |

☒ Further documents are listed in the continuation of Box C.　☒ See patent family annex.

| | |
|---|---|
| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 19 February 2021 (19.02.2021) | 09 March 2021 (09.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/045054 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2019-131774 A (SUGINO MACHINE LIMITED) 08 August 2019 (2019-08-08) claims | 1-6 |
| P, A | WO 2020/203147 A1 (DAIO PAPER CORP.) 08 October 2020 (2020-10-08) claims | 1-6 |
| P, A | WO 2020/142793 A1 (GRANBIO INTELLECTUAL PROPERTY HOLDINGS, LLC) 09 July 2020 (2020-07-09) claims | 1-6 |

Form PCT/ISA/210 (continuation of second sheet) (January 2015)

**INTERNATIONAL SEARCH REPORT**
Information on patent family members

International application No.

PCT/JP2020/045054

| Patent Documents referred in the Report | Publication Date | Patent Family | Publication Date |
|---|---|---|---|
| JP 2017-105983 A | 15 Jun. 2017 | US 2018/0362405 A1 claims, paragraph [0148], examples (paragraphs [0431]-[0444]) WO 2017/094812 A1 CN 108368347 A | |
| JP 2019-001876 A | 10 Jan. 2019 | US 2020/0115471 A1 claims, paragraph [0083], example 3 WO 2018/230600 A1 EP 3640265 A1 CN 110741020 A KR 10-2020-0019687 A CA 3067521 A | |
| JP 2015-059206 A | 30 Mar. 2015 | (Family: none) | |
| JP 2019-131792 A | 08 Aug. 2019 | WO 2019/150907 A1 | |
| JP 2019-131774 A | 08 Aug. 2019 | (Family: none) | |
| WO 2020/203147 A1 | 08 Oct. 2020 | (Family: none) | |
| WO 2020/142793 A1 | 09 Jul. 2020 | (Family: none) | |

Form PCT/ISA/210 (patent family annex) (January 2015)

21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019001876 A